# EUROPÄISCHE PATENTSCHRIFT

(11) **EP 1 924 746 B1**
(45) Veröffentlichungstag und Bekanntmachung des Hinweises auf die Patenterteilung: **27.04.2016**
(21) Anmeldenummer: 06793470.3
(22) Anmeldetag: 12.09.2006
(51) Int. Cl.: E01C 21/00, B60G 3/01, E01C 23/088, B60G 17/019

(54) **SELBSTFAHRENDE BAUMASCHINE MIT HUBSÄULE**
SELF-PROPELLED CONSTRUCTION MACHINE WITH LIFTING COLUMNS
MACHINE DE CONSTRUCTION AUTOMOBILE AVEC COLONNE ÉLÉVATRICE

(30) Priorität: 12.09.2005 DE 102005043531; 15.09.2005 DE 102005044211
(43) Veröffentlichungstag der Anmeldung: 28.05.2008
(73) Patentinhaber: Wirtgen GmbH, 53578 Windhagen (DE)
(72) Erfinder: BUSLEY, Peter, 53545 Linz/Rhein (DE); TEWES, Günter, 53572 Unkel/Rhein (DE)
(74) Vertreter: von Kreisler Selting Werner - Partnerschaft von Patentanwälten und Rechtsanwälten mbB
(86) Internationale Anmeldenummer: PCT/EP2006/066305
(87) Internationale Veröffentlichungsnummer: WO 2007/031531

(56) Entgegenhaltungen:
- EP-A2- 1 154 075
- WO-A-93/08003
- DE-A1- 3 812 809
- DE-A1- 4 017 107
- DE-C1- 19 617 442
- GB-A- 2 313 347
- GB-A- 2 333 862
- US-A- 3 946 506
- US-A- 4 247 126

## Beschreibung

Die Erfindung betrifft eine selbstfahrende Baumaschine nach dem Oberbegriff des Anspruchs 1.

Derartige Baumaschinen sind beispielsweise aus der DE 103 57 074 B3 bekannt. Diese Baumaschine weist einen von einem Fahrwerk getragenen Maschinenrahmen und eine an dem Maschinenrahmen ortsfest und/oder verschwenkbar gelagerte Arbeitswalze zum Bearbeiten einer Boden- oder Verkehrsfläche auf. Das Fahrwerk hat Räder und/oder Kettenlaufwerke, die über Hubsäulen mit dem Maschinenrahmen verbunden sind und die jeweils relativ zu dem Maschinenrahmen höhenverstellbar sind.

Die Höhenverstellung wird dabei durch eine Steuerung ermöglicht, die die Hubsäulen anhebt oder absenkt, indem die Hydraulikzufuhr oder -abfuhr von Kolben-Zylindereinheiten in den Hubsäulen gesteuert wird.

Die in der DE 103 57 074 B3 beschriebene Baumaschine ist eine Recycler, wobei die Offenbarung dieser Druckschrift in diese Anmeldung, soweit sie Recycler betrifft, einbezogen wird.

Aus der DE 196 17 442 C1 ist ein Fahrwerk für eine Maschine zum Abfräsen von Straßenbelägen bekannt, bei dem beispielsweise die Vorderachse in der Art einer Pendelachse höhenverstellbar ist. Die Hubsäulen des Fahrwerks sind wechselseitig entgegengesetzt anhebbar bzw. absenkbar. Die Offenbarung dieser Druckschrift wird ebenfalls durch Bezugnahme in die vorliegende Anmeldung einbezogen.

Eine bekannte Baumaschine der Anmelderin ist der Recycler WR 2000, dessen Räder über hydraulisch in der Höhe verstellbare Hubsäulen mit dem Maschinenrahmen verbunden sind. Jedes Rad wird durch einen eigenen Hydraulikmotor angetrieben. Die bekannte Baumaschine ist mit einer Allradlenkung ausgerüstet, wobei die vorderen und/oder die hinteren Räder als Lenkachse arbeiten können.

Es versteht sich, dass die vorliegende Anmeldung nicht auf radgetriebene Baumaschinen beschränkt ist, sondern auch solche Baumaschinen umfasst, die Kettenlaufwerke aufweisen oder eine Mischung aus Rädern und Kettenlaufwerken.

Die US 3,946,506 A beschreibt eine selbstfahrende Straßenbaumaschine mit einem von einem Fahrwerk getragenen Maschinenrahmen mit den Merkmalen des Oberbegriffs des Anspruchs 1. An dem Maschinenrahmen ist eine Arbeitswalze ortsfest gelagert. Das Fahrwerk weist ein vorderes sowie zwei hintere Kettenlaufwerke auf, die über Hubsäulen mit dem Maschinenrahmen verbunden sind und die jeweils relativ zu dem Maschinenrahmen höhenverstellbar sind. Die Hubsäulen haben zwei ineinander schiebbare Hohlzylinder, wobei innerhalb der Hohlzylinder eine Kolben-Zylindereinheit zur Höhenverstellung des Maschinenrahmens relativ zur Bodenoberfläche angeordnet ist.

An dem einzigen in Fahrtrichtung vorderen Kettenlaufwerk ist an der Hubsäule eine Anzeigeeinrichtung angebracht, die eine visuelle Anzeige des Abstandes des Maschinenrahmens relativ zu dem vorderen Kettenlaufwerk ermöglicht.

Die GB 2313347 betrifft ein höhenverstellbares Fahrwerk für ein Geländefahrzeug, das ein höhenverstellbares Feder-/Dämpfungssystem aufweist. Die Entgegenhaltung hat zum Ziel, ein Fahrwerk zu schaffen, bei dem das Risiko eines Bodenkontaktes des Fahrgestells minimiert wird. Hierzu wird ein Höhensensor verwendet, der den Abstand des oberen Endes des Feder/Dämpfungssystems zu dem Schwingarm der Radaufhängung misst. Das System benötigt zusätzlich einen Lastsensor, der die aktuelle Radlast misst und einen Drehungssensor, um festzustellen, ob das Rad durchdreht. Eine Steuereinheit überwacht diese Signale und hebt das Fahrgestell relativ zu dem Boden an, wenn ein Durchdrehen des Rades und eine Verminderung der Last auf das Rad festgestellt wird, weil dann ein Bodenkontakt mit dem Fahrgestell unterstellt wird.

Bei anderen bekannten Baumaschinen werden die Hubsäulen manuell über Schaltventile verstellt, wobei Sensoren das Erreichen vorbestimmter Positionen des Kolbens der die Hubsäule verstellenden Kolben-Zylindereinheit detektieren. Die Sensoren können beispielsweise die Oberkante des Kolbens in der Kolben-Zylindereinheit detektieren. Ein erster Sensor detektiert die Position des Kolbens in einer Betriebsposition zum Fräsen und ein weiterer Sensor detektiert die Position des Kolbens in einer Transportposition. In der Betriebsposition hat der Maschinenrahmen daher stets den gleichen vorbestimmten Abstand von der Bodenfläche. Wenn der Kolben die vordefinierten Sensorpositionen verlassen hat, sind die Informationen über die Lage der Maschine verloren. Insbesondere lassen sich ohne Umbau der Positionssensoren nicht andere Betriebspositionen flexibel einstellen, z.B. ist nicht einmal eine Betriebsposition einstellbar, die zwar parallel zu von der voreingestellten Betriebsposition ist, aber in der Höhe von dieser abweicht. Erst recht ist es nicht möglich, eine definierte Querneigung oder eine sonstige zweckmäßige Position des Maschinenrahmens bzw. der Maschine ohne umständlichen Umbau einzustellen.

Dabei entsteht zusätzlich das Problem, dass aufgrund unterschiedlicher Lasten oder Lastverteilungen, z.B. aufgrund eines unterschiedlichen Füllstandes des Kraftstoffbehälters oder eines Wasserbehälters der Maschinenrahmen einen unterschiedlichen Abstand zu der Boden- oder Verkehrsfläche einnehmen kann.

Bei Rädern ergeben sich außerdem Abweichungen aufgrund des Fülldrucks, der Temperatur und der Wechselwirkung des relativ weichen Rades mit der Boden- oder Verkehrsfläche, die beispielsweise eine Abstandsveränderung von mehreren cm bewirken können. Diese Abstandsveränderungen des Maschinenrahmen relativ zu dem Boden machen es erforderlich, die Position der Sensoren zu verlagern. Es ist zwar auch möglich, den Sensor für die Betriebsposition zu entsperren und diese Hubposition zu überfahren, allerdings besteht der Nachteil, dass wenn der mechanische Anschlag der Kolben-Zylindereinheit erreicht ist, der Kolben an seinen Endflächen gegen die entsprechenden Endflächen des Zylinders anstößt, wobei sich der Kolben der Kolben-Zylindereinheit bei Lenkbetätigung der Räder losdrehen kann.

Der Erfindung liegt die Aufgabe zugrunde, die vorgenannten Nachteile zu vermeiden und es dem Fahrzeugführer zu ermöglichen, beliebige Hubpositionen der Hubsäulen als Betriebsposition insbesondere für den Arbeitsbetrieb auszuwählen.

Zur Lösung dieser Aufgabe dienen die Merkmale des Anspruchs 1.

Die Erfindung sieht in vorteilhafter Weise vor, dass jede einzelne höhenverstellbare Hubsäule eine Messeinrichtung zum Messen des aktuellen Hubzustandes der Hubsäule aufweist, die Hubsäulen aus zwei ineinanderschiebbaren Hohlzylindern bestehen, die als Führungseinheit dienen und die mindestens eine Kolben-Zylindereinheit zur Höhenverstellung vorzugsweise koaxial im Inneren aufnehmen, jede einzeln höhenverstellbare Hubsäule eine Messeinrichtung zum Messen des aktuellen Hubzustandes der Hubsäule aufweist, die Messeinrichtung mit relativ zueinander entsprechend der Hubstellung verstellbaren Elementen der Hubsäule derart gekoppelt ist, dass kontinuierlich ein Wegsignal hinsichtlich der Hubposition jeder Hubsäule von der Messeinrichtung detektierbar ist, und eine Steuerung, die die Wegmesssignale der Messeinrichtungen aller Hubsäulen erhält, den Hubzustand der Hubsäulen in Abhängigkeit von den Wegmesssignalen der Messeinrichtungen und/oder deren zeitliche Veränderungen regelt. Die Erfindung ermöglicht es in vorteilhafter Weise, dass vorwählbare Positionen der Hubsäulen geregelt eingestellt werden können, wobei das Wegmesssignal und die daraus ableitbaren Geschwindigkeits- und Beschleunigungssignale genutzt werden können. Dabei ermöglicht die Erfassung der Messwerte, den Hubzustand der Hubsäulen automatisch zu regeln. Eine Steuerung die die Messsignale der Messeinrichtung erhält, kann in Abhängigkeit von den Messsignalen der Messeinrichtung und/oder deren zeitliche Veränderung eine gewünschte Hubposition der Hubsäulen ohne Überschwingen oder mit geringstmöglichem Überschwingen geregelt einstellen.

Die Messsignale können einer Anzeigeeinrichtung für die Hubstellung der Hubsäulen zuführbar sein. Dadurch, dass der Fahrzeugführer über die Anzeigeeinrichtung eine Information über den aktuellen Hubzustand jeder Hubsäule erhält, besteht die Möglichkeit, eine frei wählbare Position des Maschinenrahmens einzustellen und als Betriebsposition zu definieren, ohne dass Endschalter oder Sensoren verlagert werden müssen. Der Fahrzeugführer hat somit die Möglichkeit, unterschiedliche Lastsituationen auszugleichen, die beispielsweise durch einen unterschiedlichen Füllstand des Kraftstofftanks oder des Wassertanks entstehen können. Ferner können Einflüsse der relativ weichen Räder aufgrund unterschiedlicher Temperaturen, eines unterschiedlichen Fülldrucks oder aufgrund der Wechselwirkungen mit dem Untergrund ausgeglichen werden und zwar für jedes Rad oder Kettenlaufwerk individuell.

Die Messeinrichtung für die Hubstellung besteht vorzugsweise aus einer Wegmesseinrichtung, wobei alle bekannten Wegmesssysteme z.B. kapazitive, induktive, mechanische Wegmesssysteme oder Lasermesssysteme verwendet werden können.

Die Hubsäulen bestehen aus zwei ineinanderschiebbaren Hohlzylindern, die als Führungseinheit dienen und die mindestens eine Kolben-Zylindereinheit, vorzugsweise koaxial im Inneren aufnehmen.

Eine bevorzugte Wegmesseinrichtung besteht aus mindestens einem mit den Elementen einer Hubsäule gekoppelten Seilzug und einem Seilzugsensor.

Dabei ist ein unter Zugspannung stehender aufrollbarer Seilzug mit relativ zueinander entsprechend der Hubstellung verschiebbaren Elementen der Hubsäule derart gekoppelt, dass kontinuierlich ein Wegsignal hinsichtlich der Hubposition jeder Hubsäule detektierbar ist. Das der Anzeigeeinrichtung übermittelte Wegsignal kann für eine manuelle Steuerung der Höhenverstellung mit Hilfe der Anzeigeeinrichtung durch den Fahrzeugführer, aber auch für eine automatische Steuerung, oder Regelung verwendet werden.

Die Baumaschine kann auf eine Referenzebene gefahren werden, wobei auf der Referenzebene eine gewünschte räumliche Lage, z.B. eine parallele Lage des Maschinenrahmens zu der Boden- oder Verkehrsfläche, durch Speichern der aktuellen Messsignale der Messeinrichtung entsprechend der aktuellen Hubstellungen der Hubsäulen als eine Referenz-Hubposition des Fahrwerks gespeichert werden.

Mit Hilfe der Referenzebene, die vorzugsweise eine Horizontalebene ist, kann der Fahrzeugführer den Maschinenrahmen in eine bestimmte Lage bringen und diese als Referenzhubposition definieren. Bei einem ebenen Maschinenrahmen ließe sich dieser beispielsweise in eine exakt waagerechte Position bringen und diese mit einem vorbestimmten Abstand von dem Boden oder der Verkehrsfläche als Referenz-Hubposition der Hubsäulen definieren. Diese Referenzhubposition kann der Fahrzeugführer mit Hilfe der Anzeigeeinrichtung erkennen und bei Bedarf gezielt anfahren. Andererseits ist es auch möglich, bestimmte Hubsäulen oder eine Kombination von Hubsäulen um einen bestimmten Betrag anzuheben oder abzusenken. Der Fahrzeugführer kann beispielsweise auch eine um einen bestimmten Betrag, z.B. 100 mm abweichende Betriebsposition von der Referenzhubposition einstellen oder eine bestimmte Querneigung oder eine beliebig von dem Fahrzeugführer definierte Ebene im Raum.

Bei einem bevorzugten Ausführungsbeispiel ist vorgesehen, dass für jede Hubsäule mindestens ein von der Messeinrichtung überwachter Grenzwert für die Höhenverstellung einstellbar ist, der die unterste und/oder oberste Hubposition einer Hubsäule auf eine vorbestimmte Position beschränkt. Auf diese Weise ist sichergestellt, dass die im Inneren einer Hubsäule vorgesehene Kolben-Zylindereinheit nicht gegen ihre jeweiligen mechanischen Endanschläge aufläuft, da in diesen mechanischen Endpositionen, insbesondere bei Lenkeinschlägen die Kolben-Zylindereinheit beschädigt werden kann oder sich von der Hubsäule losdrehen kann.

Demzufolge ist vorgesehen, dass die unterste oder oberste Hubposition in Bewegungsrichtung vor dem mechanischen Anschlag des Kolbens gegen den Zylinder der Kolben-Zylindereinheit liegt.

Die Erfassung der Messwerte ermöglicht es einer Steuerung, die die Messsignale der Messeinrichtungen erhält, den Hubzustand der Hubsäulen automatisch derart zu regeln, dass der Maschinenrahmen eine geringstmögliche Verlagerung aufgrund der Boden- oder Verkehrsflächenstruktur erfährt.

Alternativ ist es auch möglich, dass die Steuerung mit Hilfe der Messsignale den Hubzustand der Hubsäulen derart regelt, dass der Maschinenrahmen eine aufgrund der vorhandenen Boden- oder Verkehrsflächenstruktur geringstmögliche Querneigung oder Querschwingung quer zur Fahrtrichtung erfährt.

Es kann auch vorgesehen sein, dass bei der Veränderung des Hubzustandes eines Rades oder Kettenlaufwerks ein in Querrichtung oder Längsrichtung des Maschinenrahmens benachbartes Rad oder Kettenlaufwerk entgegengesetzt höhenverstellbar ist. Die Steuerung des Hubzustandes kann beispielsweise entsprechend der in der DE 196 17 442 C1 beschriebenen hydraulischen Methode erfolgen. Bei einer hydraulischen Zwangskopplung von benachbarten Hubsäulen ist aufgrund der betragsgleichen Hubverstellung eine einzige Messeinrichtung für beide Hubsäulen ausreichend.

Allerdings besteht auch die Möglichkeit den Hubzustand jedes Rades rein elektronisch in der Art einer Pendelachse zu steuern. Einer solchen Pendelachsensteuerung kann eine zusätzliche Hubverstellung durch den Fahrzeugführer überlagert werden.

Bei der wechselseitigen Steuerung des Hubzustandes werden die benachbarten Räder oder Kettenlaufwerke vorzugsweise um den gleichen Betrag entgegengesetzt höhenverstellt.

Im Falle einer Kaltfräse sind vorzugsweise die in Fahrtrichtung hinteren Räder oder Kettenlaufwerke in der Art einer Pendelachse betragsgleich gegenläufig höhenverstellbar.

Im Falle eines Recyclers können die in Fahrtrichtung hintereinanderliegenden Räder oder Kettenlaufwerke auf einer Seite der Maschine in der Art einer Pendelachse betragsgleich gegenläufig höhenverstellbar sein.

Eine Steuerung, die die Messsignale der Messeinrichtungen erhält, kann in Abhängigkeit von den Messsignalen der Messeinrichtungen und/oder deren zeitliche Veränderung eine gewünschte Hubposition der Hubsäulen ohne Überschwingen oder mit geringstmöglichem Überschwingen einstellen.

Die Messsignale der Messeinrichtungen können auf eine Längeneinheit kalibriert sein, so dass zur Höhenverstellung ein bestimmter Hubbetrag in mm eingegeben werden kann.

Die Steuerung kann die Arbeitstiefe der Arbeitswalze regeln, wobei die Steuerung die Wegmesssignale der Messeinrichtung erhält und in die Regelung der Arbeitstiefe der Arbeitswalze mit einbezieht.

Jede Hubsäule weist an dem unteren Ende einen Träger für das Rad oder Kettenlaufwerk auf, wobei ein Abstandssensor den Abstand des Trägers zur Boden- und Verkehrsfläche vorzugsweise in einem vorbestimmten Abstand vor, oder neben dem Rad oder Kettenlaufwerk misst und ein Messsignal an eine Steuerung für die Hubposition der Hubsäulen und/oder an eine Steuerung für die Arbeitstiefe der Arbeitswalze und/oder oder an die Anzeigeeinrichtung sendet.

Im Folgenden werden unter Bezugnahme auf die Zeichnungen Ausführungsbeispiele der Erfindung näher erläutert. Es zeigen:
- Fig. 1: eine Seitenansicht der erfindungsgemäßen Baumaschine, in der sich die Arbeitswalze in einer Arbeitsposition befindet,
- Fig. 2: eine Draufsicht auf die Baumaschine gemäß Fig. 1, und
- Fig. 3: eine Hubsäule der Baumaschine.

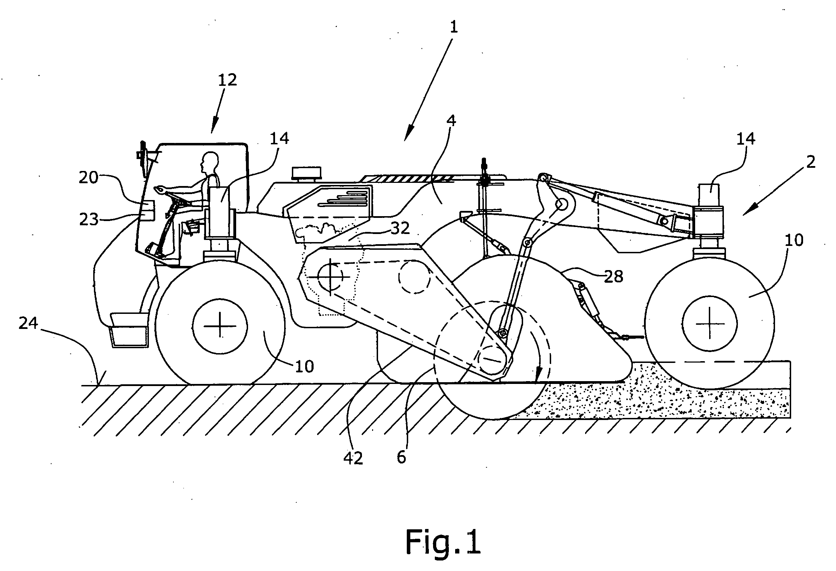

Fig. 1 zeigt eine Straßenbaumaschine 1 zum Herstellen und Bearbeiten von Fahrbahnen durch Stabilisieren ungenügend tragfähiger Böden, oder durch Recyclen von Straßendecken, mit einem von einem Fahrwerk 2 getragenen Maschinenrahmen 4, wie sie grundsätzlich aus der DE 103 57 074 B3 bekannt ist. Das Fahrwerk 2 weist jeweils zwei hintere und vordere Räder 10 auf, die höhenverstellbar an Hubsäulen 14 befestigt sind und die unabhängig voneinander oder auch synchron zueinander angehoben und abgesenkt werden können. Es versteht sich, dass anstelle der Rädern 10 auch andere Antriebsmittel z.B. auch Kettenlaufwerke, vorgesehen sein können. Die Hubsäulen 14 sind an dem Maschinenrahmen 4 befestigt.

Beide aus den vorderen bzw. hinteren Rädern 10 gebildeten Fahrwerksachsen können lenkbar sein.

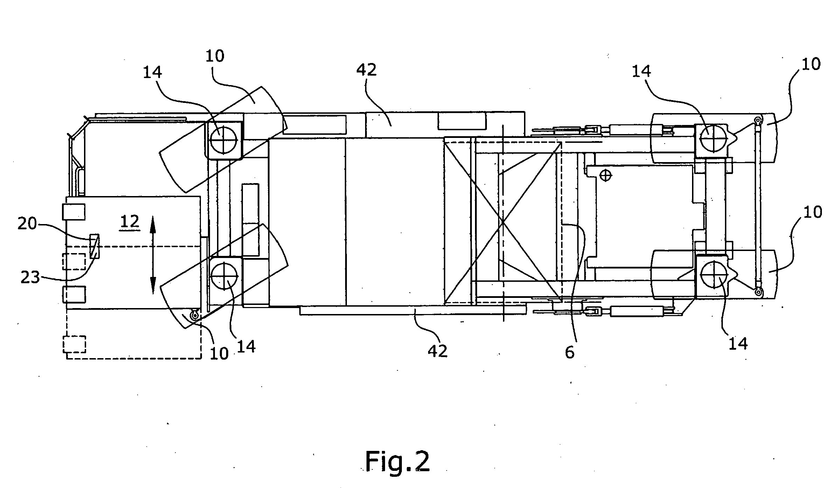

An dem Maschinenrahmen 4 ist über den Vorderrädern 10 oder vor den Vorderrädern 10 wie in Fig. 1 und 2 ersichtlich ein Fahrstand 12 für einen Fahrzeugführer angeordnet, wobei ein Verbrennungsmotor 32 für den Fahrantrieb und für den Antrieb einer Arbeitswalze 6 hinter dem Fahrer angeordnet ist. Auf diese Weise kann der Fahrstand 12 für den Fahrzeugführer ergonomisch optimiert sein.

Die sich in Fahrtrichtung z.B. im Gegenlauf drehende Arbeitswalze 6, deren Achse sich quer zur Fahrtrichtung erstreckt, ist relativ zu dem Maschinenrahmen 4 schwenkbar gelagert, so dass sie von einer Ruheposition in eine Arbeitsposition, wie in Fig. 1 dargestellt, mit Hilfe beidseitig angeordneter Schwenkarme 42 verschwenkbar ist. Jeder Schwenkarm 42 ist an einem Ende in dem Maschinenrahmen 4 gelagert und nimmt an seinem anderen Ende die Lagerung der Arbeitswalze 6 auf.

Es ist auch ein Betrieb der Maschine 1 in Rückfahrrichtung möglich, wobei dann ein Gleichlauffräsen erfolgt.

Die Arbeitswalze 6 ist beispielsweise mit in den Zeichnungen nicht dargestellten Fräswerkzeugen versehen, um eine Boden- oder Verkehrsfläche 24 bearbeiten zu können.

Die Arbeitswalze 6 ist von einer Haube 28 umgeben, die wie aus Fig. 1 ersichtlich mit Hilfe der Schwenkarme 42 gemeinsam mit der Arbeitswalze 6 anhebbar ist.

In Betriebstellung, wie in Fig. 1 ersichtlich, liegt die Haube 28 auf der zu bearbeitenden Boden- oder Verkehrsfläche 24 auf, während die Arbeitswalze 6 je nach Frästiefe weiter nach unten verschwenkbar ist.

Es versteht sich, dass auch Ausführungsformen einer solchen Baumaschine existieren, bei denen die Haube 28 oder die Haube 28 und die Arbeitswalze 6 starr an dem Maschinenrahmen 4 gelagert sind. Im zuletzt genannten Fall wird die Arbeitstiefe der Arbeitswalze 6 über die Hubsäulen 14 eingestellt, in allen anderen Fällen durch eine Höhenverstellung der Arbeitswalze 6.

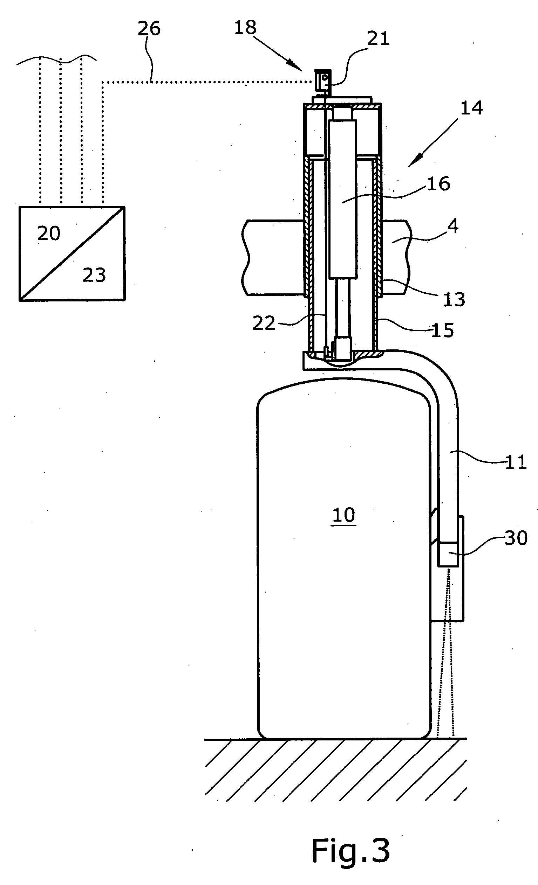

Fig. 3 zeigt eine einzelne Hubsäule 14, die aus zwei formschlüssig ineinanderschiebbaren Hohlzylindern 13,15 besteht. Die Hohlzylinder 13,15 dienen als Führungseinheit für die Höhenverstellung des Maschinenrahmens 4. Der obere äußere Hohlzylinder 13 ist an dem Maschinenrahmen 4 befestigt und der untere innere Hohlzylinder 15 ist an einem Träger 11 befestigt, der mit einem Rad 10 oder einem Kettenlaufwerk gekoppelt sein kann. Die Hubsäule 14 weist ferner eine hydraulische Kolben-Zylindereinheit 16 für die Hubverstellung auf. Die Kolben-Zylindereinheit 16 wirkt zwischen dem Maschinenrahmen 4 und dem Träger 11, so dass der Maschinenrahmen 4 relativ zu dem Träger 11 und damit letztlich relativ zu der Bodenfläche bzw. der Verkehrsfläche 24 höhenverstellbar ist. In dem Ausführungsbeispiel der Fig. 3 ist das Kolbenelement der Kolben-Zylindereinheit 16 an den Träger 11 befestigt und das Zylinderelement der Kolben-Zylindereinheit 16 an dem oberen Hohlzylinder 13, der an dem Maschinenrahmen 4 befestigt ist.

Es versteht sich, dass auch mehr als eine Kolben-Zylindereinheit 16 in der Hubsäule 14 vorhanden sein kann.

Die Kolben-Zylindereinheit 16 kann auch mit einer benachbarten Hubsäule 14 hydraulisch zwangsgekoppelt sein, wie dies grundsätzlich in der DE 196 17 442 C1 beschrieben ist, um eine rein hydraulische Pendelachse zu bilden.

Die Hubsäule ist mit einer Messeinrichtung 18 zum Messen des aktuellen Hubzustandes der Hubsäule 14 versehen, die bei dem Ausführungsbeispiel aus einem Seilzug 22 besteht, der an dem Träger 11 oder dem unteren Hohlzylinder 15 befestigt ist und andererseits mit einem Seilzugsensor 21 gekoppelt ist, der an dem Zylinderelement der Kolben-Zylindereinheit 16 oder an dem oberen Hohlzylinder 13 befestigt ist. Mit Hilfe des Seilzugsensors 21 lässt sich der Hubweg der Hubsäule 14 messen. Letztlich ist der Seilzugsensor 21 und das von ihm produzierte Wegsignal unter Einbeziehung einer Zeitmessung auch geeignet, in ein Geschwindigkeits- oder Beschleunigungssignal umgerechnet zu werden.

Das Wegmesssignal des Seilzugsensors 21 wird mit Hilfe einer Signalleitung 26 an eine Anzeigeeinrichtung 20 und/oder eine Steuerung 23 übertragen. Die Anzeigeeinrichtung 20 und/oder die Steuerung 23 erhalten von jeder Hubsäule Wegmesssignale, wie in Fig. 3 in der Zeichnung angedeutet. Bei insgesamt vier vorhandenen Hubsäulen 14 können vier Wegmesssignale in der Anzeigeeinrichtung 20 angezeigt werden, so dass der Fahrzeugführer über den aktuellen Hubzustand jeder Hubsäule unmittelbar informiert ist und die Hubstellung ggf. verändern kann.

Außerdem können die Wegmesssignale einer Steuerung 23 zugeführt werden, mit deren Hilfe die Hubstellung der Hubsäulen 14 insgesamt gesteuert oder geregelt werden können.

Beispielsweise kann die Steuerung 23 in Abhängigkeit von den Wegmesssignalen der Messeinrichtungen 18 und/oder deren zeitliche Veränderung eine gewünschte Hubposition der Hubsäule 14 ohne oder mit geringstmöglichem Überschwingen einstellen.

Im Falle einer Pendelachse kann das Pendeln rein hydraulisch durch Kolben-Zylindereinheiten 16 bewirkt werden, die einen von zwei Seiten beaufschlagbaren Kolben aufweisen und bei denen die gegeneinander arbeitenden Zylinderkammern mit den entsprechenden Zylinderkammern der Kolben-Zylindereinheit eines benachbarten Rades 10 zwangsgekoppelt sind. Alternativ kann die Höhenverstellung in der Art einer Pendelachse rein elektronisch gesteuert mit Hilfe der festgestellten Wegmesssignale erfolgen.

Die Steuerung oder Regelung kann derart sein, dass beispielsweise der Maschinenrahmen 4 eine geringstmögliche Verlagerung erfährt.

Alternativ kann der Maschinenrahmen 4 mit Hilfe des Hubzustandes der Hubsäulen 14 derart geregelt werden, dass eine vorbestimmte Querneigung des Maschinenrahmens 4 quer zur Fahrtrichtung eingehalten wird.

Nach einer weiteren Alternative kann auch der zeitliche Verlauf der Lage des Maschinenrahmens 4, z.B. ein wegstreckenabhängiger Querneigungsverlauf des Maschinenrahmens 4 mit Hilfe der Wegmesssignale und die Kolben-Zylindereinheiten 16 in Verbindung mit einer Wegstrecken- oder Maschinenpositionsmessung geregelt werden.

Letztlich ist auch verständlich, dass auch eine Längsneigung oder eine Kombination aus einer Quer- und Längsneigung mit Hilfe der Steuerung 23 geregelt werden kann.

Die Messsignale der Messeinrichtung 18 können auf eine Längeneinheit, z.B. mm, kalibriert sein. Auf diese Weise ist es für den Fahrzeugführer möglich, den Hubzustand der Hubsäulen 14 auch durch Eingabe eines bestimmten Hubes in mm zu verändern.

Jede Hubsäule 14 kann an den Trägern 11 jeweils einen Abstandssensor 30 aufweisen, der den Abstand des Trägers 11 zu Boden- und Verkehrsfläche 24 misst. Mit Hilfe des Messsignals der Abstandssensoren 30 kann die Steuerung 23 für die Hubsäulen 14 in Verbindung mit den Wegmesssignalen der Messeinrichtung 18 auch den aktuellen Abstand des Maschinenrahmens 4 von der Boden- und Verkehrsfläche 24 berechnen.

Der Abstandssensor 30 kann den Abstand des Trägers 11 zur Boden- und Verkehrsfläche 24 auch in einem vorbestimmten Abstand vor oder neben dem Rad 10 oder Kettenlaufwerk messen. Bei einer Messung vor dem Rad 10 besteht die Möglichkeit, dass Messsignal des Abstandssensors 30 dazu zu verwenden, die Höhenverstellung der Hubsäulen 14 so zu steuern, dass auf eine Bodenunebenheit sofort reagiert werden kann. Den Abstandssensoren 30 ist es letztlich auch möglich, Messsignale für eine Frästiefenregelung zu liefern, wobei die Messsignale der Abstandssensoren 30 und die Wegmesssignale der Messeinrichtung 18 gemeinsam ausgewertet werden.

## Patentansprüche

1. Selbstfahrende Straßenbaumaschine (1), insbesondere Recycler oder Kaltfräse, mit
- einem von einem Fahrwerk (2) getragenen Maschinenrahmen (4)
- einer an dem Maschinenrahmen (4) ortsfest oder verschwenkbar gelagerten Arbeitswalze (6) zum Bearbeiten einer Boden- oder Verkehrsfläche (24), wobei
- das Fahrwerk (2) Räder (10) oder Kettenlaufwerke aufweist, die über Hubsäulen (14) mit dem Maschinenrahmen (4) verbunden sind und die jeweils relativ zu dem Maschinenrahmen (4) höhenverstellbar sind, - wobei die Hubsäulen (14) aus zwei ineinanderschiebbaren Hohlzylindern (13,15) bestehen, die als Führungseinheit dienen und die mindestens eine Kolben-Zylindereinheit (16) zur Höhenverstellung vorzugsweise koaxial im Inneren aufnehmen,
**dadurch gekennzeichnet, dass**
- jede einzeln höhenverstellbare Hubsäule (14) eine Messeinrichtung (18) zum Messen des aktuellen Hubzustandes der Hubsäule (14) aufweist,
- die Messeinrichtung (18) mit relativ zueinander entsprechend der Hubstellung verstellbaren Elementen der Hubsäule (14) derart gekoppelt ist, dass kontinuierlich ein Wegsignal zur Information hinsichtlich der aktuellen Hubposition jeder Hubsäule (14) von der Messeinrichtung (18) detektierbar ist, und
- eine Steuerung (23), die die Wegmesssignale der Messeinrichtungen (18) aller Hubsäulen (14) erhält und den Hubzustand der Hubsäulen (14) in Abhängigkeit von den Wegmesssignalen der Messeinrichtungen (18) und/oder deren zeitliche Veränderungen regelt, so dass eine frei wählbare Position des Maschinenrahmens (4) einstellbar und als Betriebsposition definierbar ist.

2. Baumaschine nach Anspruch 1, **dadurch gekennzeichnet, dass** die Messeinrichtungen (18) aus Wegmesseinrichtungen bestehen.

3. Baumaschine nach Anspruch 1 oder 2, **dadurch gekennzeichnet, dass** die Messsignale der Messeinrichtungen (18) aller Hubsäulen (14) einer Anzeigeeinrichtung (20) für die Hubstellung der Hubsäulen (14) zuführbar sind.

4. Baumaschine nach einem der Ansprüche 1 bis 3, **dadurch gekennzeichnet, dass** die Messeinrichtungen (18) mit den Hubsäulen (14) gekoppelte Seilzüge (22) und Seilzugsensoren (21) als Wegmesseinrichtung aufweisen.

5. Baumaschine nach Anspruch 4, **dadurch gekennzeichnet, dass** ein unter Zugspannung stehender aufrollbarer Seilzug (22) mit relativ zueinander entsprechend der Hubstellung verstellbaren Elementen der Hubsäule (14) derart gekoppelt ist, dass kontinuierlich ein Wegsignal hinsichtlich der Hubposition jeder Hubsäule (14) detektierbar ist.

6. Baumaschine nach einem der Ansprüche 1 bis 5, **dadurch gekennzeichnet, dass** das Fahrwerk (2) mit dem Maschinenrahmen (4) auf eine Referenzebene fahrbar ist, und dass auf der Referenzebene eine gewünschte räumliche Lage, z.B. eine parallele Lage des Maschinenrahmens (4) zu der Referenzebene, durch Speichern der Messsignale der Messeinrichtungen (18) entsprechend der aktuellen Hubstellung der Hubsäulen (14) als eine Referenz-Hubposition des Fahrwerks einstellbar ist.

7. Baumaschine nach einem der Ansprüche 3 bis 6, **dadurch gekennzeichnet, dass** für jede Hubsäule (14) mindestens ein von der Messeinrichtung (18) überwachter Grenzwert für die Höhenverstellung einstellbar ist, der die unterste und/oder oberste Hubposition einer Hubsäule (14) auf einen vorbestimmten Wert beschränkt.

8. Baumaschine nach Anspruch 7, **dadurch gekennzeichnet, dass** die unterste oder oberste Hubposition in Bewegungsrichtung vor dem mechanischen Anschlag des Kolbens gegen den Zylinder der Kolben-Zylindereinheit (16) liegt.

9. Baumaschine nach Anspruch 1 bis 8, **dadurch gekennzeichnet, dass** die Steuerung (23), die die Wegmesssignale der Messeinrichtungen (18) aller Hubsäulen (14) erhält, den Hubzustand der Hubsäulen (14) derart regelt, dass der Maschinenrahmen (4) eine vorbestimmte Querneigung oder ein vorbestimmter wegstreckenabhängiger Querneigungsverlauf quer zur Fahrtrichtung aufweist.

10. Baumaschine nach einem der Ansprüche 1 bis 9, **dadurch gekennzeichnet, dass** bei der Veränderung des Hubzustandes eines Rades (10) oder Kettenlaufwerks ein in Querrichtung oder Längsrichtung des Maschinenrahmens (4) benachbartes Rad (10) oder Kettenlaufwerk entgegengesetzt höhenverstellbar ist.

11. Baumaschine nach Anspruch 10, **dadurch gekennzeichnet, dass** die benachbarten Räder (10) oder Kettenlaufwerke um den gleichen Betrag entgegengesetzt höhenverstellbar sind.

12. Baumaschine nach einem der Ansprüche 1 bis 11, **dadurch gekennzeichnet, dass** die in Querrichtung des Maschinenrahmens (4) benachbarten in Fahrtrichtung vorderen Räder (10) oder Kettenlaufwerke in der Art einer Pendelachse höhenverstellbar sind.

13. Baumaschine nach einem der Ansprüche 1 bis 12, **dadurch gekennzeichnet, dass** die Messsignale der Messeinrichtung (18) auf eine Längeneinheit kalibrierbar sind.

14. Baumaschine nach einem der Ansprüche 1 bis 13, **dadurch gekennzeichnet, dass** eine Steuerung (23) die Arbeitstiefe der Arbeitswalze (6) regelt und dass die Steuerung (23) die Wegmesssignale der Messeinrichtung (18) erhält und in die Regelung der Arbeitstiefe der Arbeitswalze (6) mit einbezieht.

15. Baumaschine nach Anspruch 1 bis 14, **dadurch gekennzeichnet, dass** jede Hubsäule (14) an dem unteren Ende einen Träger (11) für das Rad (10) oder Kettenlaufwerk aufweist, und dass ein Abstandssensor (30) den Abstand des Trägers (11) zur Boden- und Verkehrsfläche (24) misst und ein Messsignal an eine Steuerung (23) für die Hubposition der Hubsäulen (14) und/oder an eine Steuerung (23) für die Arbeitstiefe der Arbeitswalze (6) und/oder oder an die Anzeigeeinrichtung (20) sendet.

16. Baumaschine nach einem der Ansprüche 1 bis 14, **dadurch gekennzeichnet, dass** jede Hubsäule (14) an dem unteren Ende einen Träger (11) für das Rad (10) oder Kettenlaufwerk aufweist, und dass ein Abstandssensor (30) den Abstand des Trägers (11) zur Boden- und Verkehrsfläche (24) in einem vorbestimmten Abstand vor oder neben dem Rad (10) oder Kettenlaufwerk misst und das Messsignal an eine Steuerung (23) für die Hubposition der Hubsäulen (14) und/oder an eine Steuerung (23) für die Arbeitstiefe der Arbeitswalze und/oder an die Anzeigeeinrichtung (20) sendet.

## Claims

1. Automotive road construction machine (1), in particular recycler or cold milling machine, comprising
- a machine frame (4) supported by a traveling gear unit (2),
- a working drum (6) mounted at the machine frame (4) in an immovable and/or pivotable manner, and used for working a ground surface or traffic surface (24), wherein
- the traveling gear unit (2) is provided with wheels (10) or crawler track units that are connected to the machine frame (4) via lifting columns (14) and are individually adjustable in height relative to the machine frame (4),
- the lifting columns (14) comprising two hollow cylinders (13, 15) capable of telescoping that serve as a guiding unit and accommodate at least one piston cylinder unit (16) for height adjustment, preferably in a coaxial manner, on their inside,
**characterized in that**
- each individually height-adjustable lifting column (14) is provided with a measuring device (18) for measuring the current lifting state of the lifting column (14),
- the measuring device (18) is coupled with elements of the lifting column (14), which are capable of being displaced relative to one another in accordance with the lifting position, in such a manner that a path signal pertaining to the lifting position of each lifting column (14) is continuously detectable by the measuring device (18), and
- a controller (23), which receives the measured path signals from the measuring devices (18) of all the lifting columns (14) and regulates the lifting state of the lifting columns (14) in accordance with the measured path signals of the measuring devices (18) and/or their alterations over time in such a manner that a freely selectable position of the machine frame (4) is settable and is definable as an operating position.

2. Construction machine in accordance with claim 1, **characterized in that** the measuring devices (18) consist of path measuring devices.

3. Construction machine in accordance with claim 1 or 2, **characterized in that** the measured signals from the measuring devices (18) of all the lifting columns (14) are suitable for supplying to an indicator device (20) for the lifting position of the lifting columns (14).

4. Construction machine in accordance with any one of claims 1 to 3, **characterized in that** the measuring devices (18) are provided with wire-ropes (22), which are coupled with the lifting columns (14), and wire-rope sensors (21) as path measuring devices.

5. Construction machine in accordance with claim 4, **characterized in that** a wire-rope (22) that is under tension and capable of being rolled up is coupled with elements of the lifting column (14), which are capable of being displaced relative to one another in accordance with the lifting position, in such a manner that a path signal pertaining to the lifting position of each lifting column (14) is detectable continuously.

6. Construction machine in accordance with any one of claims 1 to 5, **characterized in that** the traveling gear unit (2) with the machine frame (4) can be moved to a reference plane, and that a desired spatial position, e.g. a parallel position of the machine frame (4) relative to the reference plane, can be set as a reference lifting position of the traveling gear unit on the reference plane by storing the measured signals of the measuring devices (18) in accordance with the current lifting position of the lifting columns (14).

7. Construction machine in accordance with any one of claims 3 to 6, **characterized in that** at least one limiting value for the height adjustment monitored by the measuring device (18) can be set for each lifting column (14), the said limiting value limiting the lowest and/or highest lifting position of a lifting column (14) to a predetermined value.

8. Construction machine in accordance with claim 7, **characterized in that** the lowest or highest lifting position in the direction of movement is positioned before the mechanical limit stop of the piston against the cylinder of the piston cylinder unit (16).

9. Construction machine in accordance with claim 1 to 8, **characterized in that** the controller (23), which receives the measured path signals from the measuring devices (18) of all the lifting columns (14), regulates the lifting state of the lifting columns (14) in such a manner that the machine frame (4) shows a pre-determined transverse inclination or a pre-determined path-dependent transverse inclination development transverse to the direction of travel.

10. Construction machine in accordance with one of claims 1 to 9, **characterized in that**, with the alteration of the lifting state of one wheel (10) or crawler track unit, a wheel (10) or crawler track unit that is neighbouring in the transverse direction or the longitudinal direction of the machine frame (4) is adjustable in height in an opposite manner.

11. Construction machine in accordance with claim 10, **characterized in that** the neighbouring wheels (10) or crawler track units are height-adjustable by the same amount in an opposite manner.

12. Construction machine in accordance with one of claims 1 to 11, **characterized in that** the wheels (10) or crawler track units neighbouring in the transverse direction of the machine frame (4), which are the front wheels or crawler track units when seen in the direction of travel, are height-adjustable in the manner of a full-floating axle.

13. Construction machine in accordance with one of claims 1 to 12, **characterized in that** the measured signals of the measuring device (18) are suitable for calibrating to a unit of length.

14. Construction machine in accordance with one of the claims 1 to 13, **characterized in that** a controller (23) regulates the working depth of the working drum (6), and that the controller (23) receives the measured path signals from the measuring device (18) and includes them into the regulation of the working depth of the working drum (6).

15. Construction machine in accordance with claim 1 to 14, **characterized in that** each lifting column (14) is provided at the lower end with a support (11) for the wheel (10) or crawler track unit, and that a distance sensor (30) measures the distance of the support (11) to the ground surface and traffic surface (24) and transmits a measured signal to a controller (23) for the lifting position of the lifting columns (14), and/or to a controller (23) for the working depth of the working drum (6), and/or to the indicator device (20).

16. Construction machine in accordance with one of the claims 1 to 14, **characterized in that** each lifting column (14) is provided at the lower end with a support (11) for the wheel (10) or crawler track unit, and that a distance sensor (30) measures the distance of the support (11) to the ground surface and traffic surface (24) in a pre-determined distance in front of or next to the wheel (10) or crawler track unit and transmits the measured signal to a controller (23) for the lifting position of the lifting columns (14), and/or to a controller (23) for the working depth of the working drum, and/or to the indicator device (20).

## Revendications

1. Machine de travaux routiers automobile (1), en particulier recycleur ou fraise à froid, avec
- un cadre de machine (4) porté par un châssis (2)
- un rouleau de travail (6) supporté de façon stationnaire ou pivotante sur le cadre de machine (4) pour le traitement d'une surface de sol ou de circulation (24), dans laquelle
- le châssis (2) présente des roues (10) ou des trains à chenilles qui sont raccordés au cadre de machine (4) par le biais de colonnes de levage (14) et qui sont respectivement réglables en hauteur par rapport au cadre de machine (4), dans laquelle les colonnes de levage (14) se composent de deux cylindres creux (13, 15) pouvant s'emboîter l'un dans l'autre qui servent d'unité de guidage et qui logent intérieurement, de préférence de façon coaxiale, au moins une unité piston-cylindre (16) pour le réglage en hauteur,
**caractérisée en ce que**
- chaque colonne de levage (14) réglable en hauteur individuellement présente un dispositif de mesure (18) pour la mesure de l'état de levage actuel de la colonne de levage (14),
- le dispositif de mesure (18) est couplé à des éléments de la colonne de levage (14) qui sont réglables les uns par rapport aux autres en fonction de la position de levage de telle sorte que, de façon continue, un signal de course peut être détecté par le dispositif de mesure (18) pour l'information concernant la position de levage actuelle de chaque colonne de levage (14), et
- une commande (23), qui reçoit les signaux de mesure de course des dispositifs de mesure (18) de toutes les colonnes de levage (14) et régule l'état de levage des colonnes de levage (14) en fonction des signaux de mesure de course des dispositifs de mesure (18) et/ou de leurs variations dans le temps, de telle sorte qu'une position librement sélectionnable du cadre de machine (4) peut être réglée et être définie en tant que position de fonctionnement.

2. Machine de travaux selon la revendication 1, **caractérisée en ce que** les dispositifs de mesure (18) se composent de dispositifs de mesure de course.

3. Machine de travaux selon la revendication 1 ou 2, **caractérisée en ce que** les signaux de mesure des dispositifs de mesure (18) de toutes les colonnes de levage (14) peuvent être conduits à un dispositif d'affichage (20) de la position de levage des colonnes de levage (14).

4. Machine de travaux selon l'une des revendications 1 à 3, **caractérisée en ce que** les dispositifs de mesure (18) présentent des commandes par câble (22) couplées aux colonnes de levage (14) et des capteurs de commandes par câble (21) en tant que dispositif de mesure de course.

5. Machine de travaux selon la revendication 4, **caractérisée en ce qu'**une commande par câble (22) enroulable placée sous contrainte de traction est couplée à des éléments de la colonne de levage (14) réglables les uns par rapport aux autres en fonction de la position de levage de telle sorte que, de façon continue, un signal de course peut être détecté concernant la position de levage de chaque colonne de levage (14).

6. Machine de travaux selon l'une des revendications 1 à 5, **caractérisée en ce que** le châssis (2) avec le cadre de machine (4) est mobile sur un plan de référence, et **en ce que**, sur le plan de référence, une posture spatiale souhaitée, par exemple une posture parallèle du cadre de machine (4) par rapport au plan de référence, peut être réglée conformément à la position de levage actuelle des colonnes de levage (14) en tant que position de levage de référence du châssis par enregistrement des signaux de mesure des dispositifs de mesure (18).

7. Machine de travaux selon l'une des revendications 3 à 6, **caractérisée en ce que**, pour chaque colonne de levage (14), au moins une valeur limite du réglage en hauteur surveillée par le dispositif de mesure (18) peut être réglée, qui limite à une valeur prédéfinie la position de levage la plus basse et/ou la plus haute d'une colonne de levage (14).

8. Machine de travaux selon la revendication 7, **caractérisée en ce que** la position de levage la plus basse ou la plus haute est située, dans le sens du mouvement, avant la butée mécanique du piston contre le cylindre de l'unité piston-cylindre (16).

9. Machine de travaux selon les revendications 1 à 8, **caractérisée en ce que** la commande (23) qui reçoit les signaux de mesure de course des dispositifs de mesure (18) de toutes les colonnes de levage (14) régule l'état de levage des colonnes de levage (14) de telle sorte que le cadre de machine (4) présente une inclinaison transversale prédéfinie ou un tracé d'inclinaison transversale prédéfini, dépendant du trajet de course, transversalement au sens de la marche.

10. Machine de travaux selon l'une des revendications 1 à 9, **caractérisée en ce que**, lors de la variation de l'état de levage d'une roue (10) ou d'un train de chenilles, une roue (10), un train de chenilles, voisin(e) dans la direction transversale ou la direction longitudinale du cadre de machine (4), peut être réglé(e) en hauteur dans le sens opposé.

11. Machine de travaux selon la revendication 10, **caractérisée en ce que** les roues (10) ou trains de chenilles voisin(e)s peuvent être réglé(e)s en hauteur de la même valeur dans le sens opposé.

12. Machine de travaux selon l'une des revendications 1 à 11, **caractérisée en ce que** les roues (10) ou trains de chenilles avant dans le sens de la marche, voisin(e)s dans la direction transversale du cadre de machine (4), sont réglables en hauteur à la façon d'un essieu pendulaire.

13. Machine de travaux selon l'une des revendications 1 à 12, **caractérisée en ce que** les signaux de mesure du dispositif de mesure (18) peuvent être calibrés sur une unité de longueur.

14. Machine de travaux selon l'une des revendications 1 à 13, **caractérisée en ce qu'**une commande (23) régule la profondeur de travail du rouleau de travail (6), et **en ce que** la commande (23) reçoit les signaux de mesure de course du dispositif de mesure (18) et les intègre dans la régulation de la profondeur de travail du rouleau de travail (6).

15. Machine de travaux selon les revendications 1 à 14, **caractérisée en ce que** chaque colonne de levage (14) présente, à l'extrémité inférieure, un support (11) pour la roue (10) ou le train de chenilles, et **en ce qu'**un capteur de distance (30) mesure la distance entre le support (11) et la surface de sol ou de circulation (24) et envoie un signal de mesure à une commande (23) pour la position de levage des colonnes de levage (14) et/ou à une commande (23) pour la profondeur de travail du rouleau de travail (6) et/ou au dispositif d'affichage (20).

16. Machine de travaux selon l'une des revendications 1 à 14, **caractérisée en ce que** chaque colonne de levage (14) présente à l'extrémité inférieure un support (11) pour la roue (10) ou le train de chenilles, et **en ce qu'**un capteur de distance (30) mesure la distance entre le support (11) et la surface de sol ou de circulation (24) à une distance prédéfinie devant ou près de la roue (10) ou du train de chenilles, et envoie le signal de mesure à une commande (23) pour la position de levage des colonnes de levage (14) et/ou à une commande (23) pour la profondeur de travail du rouleau de travail et/ou au dispositif d'affichage (20).
